# NEW EUROPEAN PATENT SPECIFICATION

(11) **EP 0 377 334 B2**
(45) Date of publication and mention of the opposition decision: **29.07.1998**
(45) Mention of the grant of the patent: 21.06.1995
(21) Application number: 89313689.5
(22) Date of filing: 29.12.1989
(51) Int. Cl.: H04N 5/45

(54) **Picture-in-picture systems**
Bild-im-Bild-Systeme
Systèmes d'image dans l'image

(30) Priority: 31.12.1988 KR 1810188
(43) Date of publication of application: 11.07.1990
(73) Proprietor: SAMSUNG ELECTRONICS CO., LTD., Suwon-City, Kyounggi-Do 441-370 (KR)
(72) Inventor: Yu, Jae-Chun, Seoul (KR)
(74) Representative: Stanley, David William

(56) References cited:
- EP-A- 229 526
- EP-A- 0 267 020
- DE-A- 3 920 119
- PATENT ABSTRACTS OF JAPAN, vol. 8, no. 39 (E-228)[1476], 21st February 1984;& JP-A-58 196 778
- Funkschau 1977, vol. 22, p. 71
- IEEE Transactions on Consumer Electronics, vol. 34, no. 3, August 1988, pp. 814-818

## Description

This invention generally relates to picture-in-picture (PIP) systems, such as are used in, for example, video cassette recorders (hereinafter referred to as VCRs) and television sets.

In general, a known PIP system of a VCR displays a certain picture as a main screen and a given number of sub-screens, all of which have the same image source, may be arranged at predetermined positions on the main screen by pressing a PIP key. Upon pressing a PLAY key, the image from the video tape of the VCR will replace the existing main screen, whilst the sub-screens keep on displaying the previous pictures. However, in this circumstance, if a channel UP/DOWN key is input to change the sub-screen display at a user's choice, then all the sub-screens will display the same new picture whilst the main screen displays the existing picture from the VCR tape.

Thus, there is a disadvantage that the PIP system displays the same picture on all of the sub-screens.

EP-A-0 229 526 (Sony) discloses a PIP system having a main screen and one or more sub-screens. IEEE Transactions on Consumer Electronics, 1988 International Conference on Consumer Electronics, part 1, pages 814 - 818 discloses a menu driven system for use with a television.

Preferred embodiments of the present invention aim to provide a multi-screen PIP system which is able to provide a plurality of PIP screens displaying different pictures.

According to one aspect of the present invention, there is provided a video display system in accordance with claim 1.

Preferably, the OSD unit is arranged to display simultaneously the channel numbers of a plurality of different channels that are available for broadcasting, and the microcomputer is arranged to display one of said channel numbers in such a manner as to distinguish it from the other channel numbers.

Preferably, said microcomputer is arranged to display said one of said channel numbers by causing said channel number to flash or flicker.

Preferably, said microcomputer is arranged to receive a channel UP/DOWN signal and, in response thereto, cause said plurality of channel numbers and/or said one of said channel numbers to be varied.

A portion of said main screen may be visible simultaneously with said sub-screens, on the same screen.

Preferably, a line input is provided to said input selectors in addition to signals from said first and second tuners.

Preferably, said microcomputer is arranged to display at least one moving image and a plurality of still images in different ones of said sub-screens.

A system as above may further comprise a visual display means for displaying a visual image corresponding to a signal output from said mixer.

In another aspect, the present invention provides use of a system according to any of the preceding aspects of the invention to provide a visual display, by :
(a) outputting rotation data from the microcomputer (10) to perform a strobe-stop, upon receipt of a SCREEN PROGRAM signal;
(b) checking whether a channel UP/DOWN signal is received by calling said on-screen-display in the strobe-step condition, increasing a pointer value if said channel UP/DOWN signal is received, selecting a presently displayed channel if said UP/DOWN signal is not received but said ROTATE signal is received, and thereupon outputting the rotation data; and
(c) clearing said on-screen-display if the SCREEN PROGRAM signal is received while the ROTATE signal is not received at the step (b) and outputting strobe data to release the strobe-stop condition.

Preferably, said on-screen-display is called by the steps of:
(i) outputting row and column address data and channel number data stored in a channel memory if the on-screen-display is called, and checking whether said row address is the same as a last address; and
(ii) checking whether a display-on flag is set to "1" if said row address in step (i) is the same as the last address, turning off a channel number on a row corresponding to a value of the sum of the pointer and the row address if said display is in an ON-state, or otherwise turning on the channel number on said row address corresponding to the value of the sum of the pointer and the row address.

Preferably, said step (a) comprises the sub-steps of:
(a1) setting a screen mode flag to "1", checking whether said SCREEN PROGRAM signal is received, and checking repeatedly whether said SCREEN PROGRAM signal is received until said SCREEN PROGRAM signal is detected;
(a2) checking whether a four picture-in-picture mode is set when the SCREEN PROGRAM signal is received at step (a1), and outputting the rotation data to perform the strobe-stop mode if the four picture-in-picture mode is set; and
(a3) outputting corresponding four picture-in-picture data if the four picture-in-picture mode is not set at step (a2), and thereupon outputting the rotation data to perform the strobe-stop mode.

Preferably, the step (b) comprises the sub-steps of:
(b1) calling the on-screen-display at the strobe-stop mode and checking whether the channel UP/DOWN signal is received;
(b2) increasing the pointer value if the channel UP/DOWN signal is received at the step (b1) and re-calling the on-screen-display; and
(b3) checking whether the ROTATE signal is received if the channel UP/DOWN signal is not received at the step (b1), selecting a corresponding channel which is presently flickering if the ROTATE signal is received, thereupon outputting the rotation data, and then re-calling the on-screen-display.

Preferably, the step (c) comprises the sub-steps of:
(c1) checking whether the SCREEN PROGRAM signal is received if the ROTATE signal is not received, and re-executing the step (b) if the SCREEN PROGRAM signal is not received;
(c2) dearing the on-screen-display if the SCREEN PROGRAM signal is received at the sub-step (c1); and
(c3) outputting the strobe data to release the strobe-stop mode and setting the screen mode to "zero".

For a better understanding of the invention and to show how the same may be carried into effect, reference will now be made, by way of example, to the accompanying diagrammatic drawings, in which:
Figure 1 is a block diagram of one example of a PIP system embodying the invention in a VCR;
Figures 2A-2H are screen status diagrams illustrating examples of operation of the system of Figure 1;
Figure 3 is a flow chart illustrating an example of the overall operation of the system;
Figure 4 is a flow chart illustrating one example of a procedure for displaying channel status; and
Figure 5 is a flow chart illustrating one example of a procedure for flickering a skip channel on-screen-display (OSD).

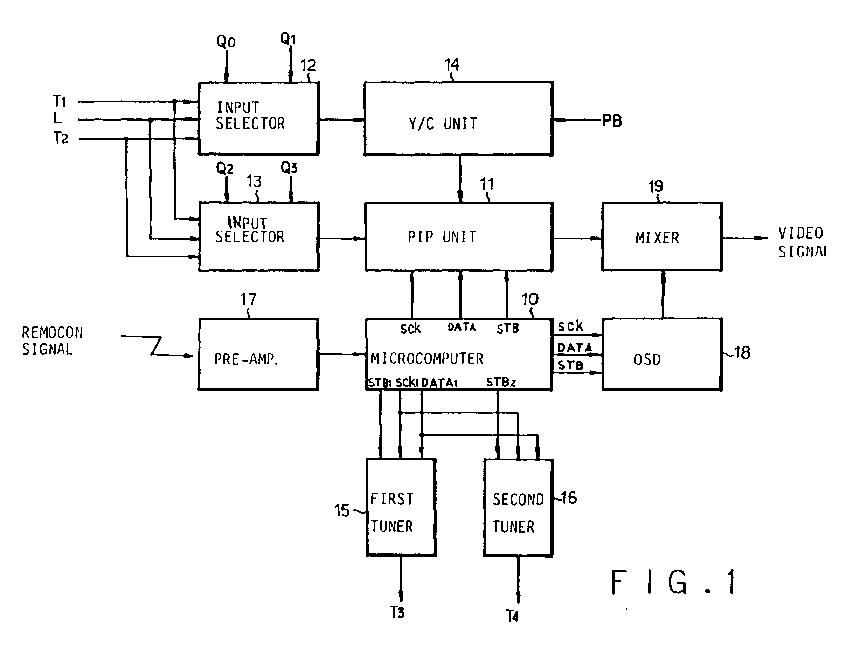

Referring now to Figure 1, a signal from a remote controller (not shown) is amplified by a pre-amplifier 17 and applied to a microcomputer 10. The microcomputer 10 decodes the received signal to determine which key of the remote controller has been pressed. First and second tuners 15, 16 are used to perform a picture-in-picture operation, and make it possible to configure a multi-screen display freely as a user desires. Selection of the first or the second tuner 15, 16 is controlled via first and second strobe terminals STB₁ and STB₂ of the microcomputer 10. Data output from a data terminal DATA₁ of the microcomputer 10 affects the channel to be selected.

Output terminals T₃, T₄ of the first and second tuners 15, 16 are connected respectively to input terminals T₁, T₂ of input selectors 12, 13. Aline L connected to both of the input selectors 12, 13 is used to connect external equipment to the VCR. Each of the input selectors 12, 13 is controlled by given data Q₀, Q₁ and Q₂, Q₃ generated from the microcomputer 10 to select one of the signals applied from the input terminals T1, T2 and the line L. The input selector 12 is used to select a main screen, while the input selector 13 is used to select sub-screens.

The signals selected by the input selectors 12, 13 are applied to a luminance/colour (Y/C) unit 14 and a picture-in-picture (PIP) unit 11, respectively.

The Y/C unit 14 is used to create the main screen. The signals selected for the main screen by the input selector 12 will be a first screen image source from the first tuner 15 if a playback (PB) key is not input, and an image source from tape if the playback key (PB) is input.

The main screen and the sub-screen selected by the input selectors 12, 13 are applied to the PIP unit 11. The PIP screen generated under the control of signals from clock SCK, data DATA and strobe STB terminals of the microcomputer 10 is applied into a mixer 19. An On-Screen-Display (OSD) 18 displays characters under the control of signals from the clock SCK, data DATA and strobe STB terminals of the microcomputer 10. The character data is sent to the mixer 19 to be superimposed upon the screen. The mixer 19 superimposes the characters upon the screen to provide a video signal output.

The PIP unit 11 is controlled by exchanging data in series with the microcomputer 10. As is shown in Table 1 hereinbelow, if the microcomputer 10 outputs the data (0000 0010), the PIP unit 11 performs a rotation function.

**Table 1**

| DATA | FUNCTION |
|---|---|
| 0000 0010 | rotation |
| 0010 1111 | strobe |
| . | . |
| . | . |
| . | . |

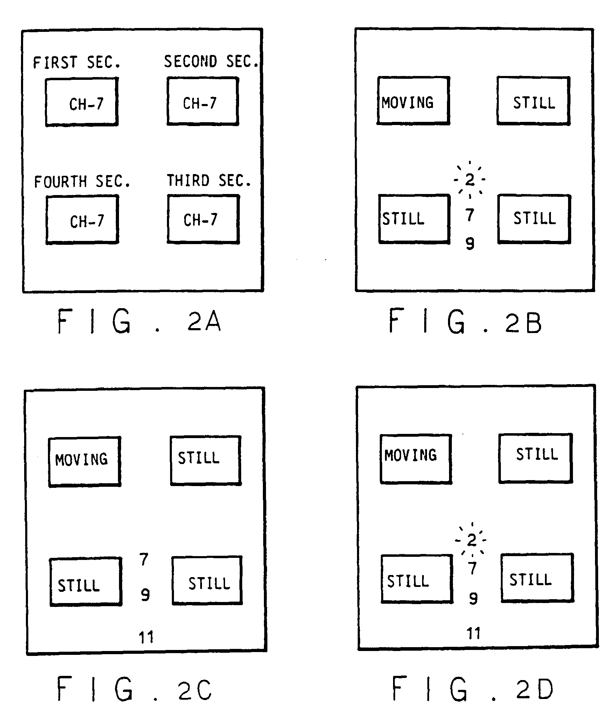

Upon pressing a ROTATE key (for example, in a 4-PIP system), the microcomputer will stop strobing. To achieve this strobe-stop condition, the strobe data should be output in series to the PIP unit 11 from the microcomputer 10. To configure the PIP screen, it is necessary to press a SCREEN PROGRAM key, when the screen display has the normal condition illustrated in Figure 2A.

Thus, upon pressing the SCREEN PROGRAM key, strobing will be stopped and, as shown in the example of Figure 2B, a skip channel is displayed by the OSD 18, such that the upper-most channel number flickers. Strobing transfers the position of the moving screen in a given direction, rotationally. Only one of the four sub-screens is a moving screen, while the others remain as still screens. The strobe-stop state is the state where the system remains in one of the strobing states, i.e., any one of the four sub-screens is a moving screen and the others are still screens. A skip channel represents a channel that is available for actual broadcasting. A memory which stores the skip channel numbers is called a skip memory.

As shown in Figure 2B, the upper-most channel number flickers in the respective strobe-stop state. Thereafter, pressing a channel UPIDOWN key changes the channel number that is flickering. Upon pressing the channel UP/DOWN key for a lower channel when the lower-most channel 9 is flickering, channel 2 will disappear and as, shown in Figure 2C, channel 11, the next channel in the skip memory, will be displayed.

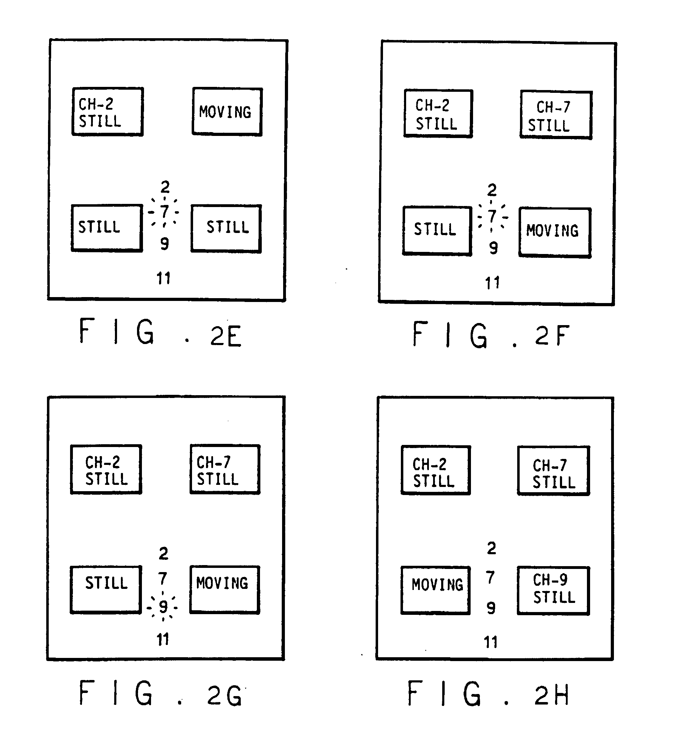

The following is a description of how a screen display comprised of four channel-7 screens is changed to one comprised of channels 2, 7, 9, and 11. From the condition as shown in Figure 2A, pressing the SCREEN PROGRAM key results in the condition shown in Figure 2D. Upon pressing the ROTATE key, the moving sub-screen currently at a first location (top left) is changed to the flickering channel 2 and is transferred to a second location (top right). As shown in Figure 2E, the first location is configured with the channel 2 in still mode.

Thereafter, in order to configure the second location with channel 7, executing a rotation, or pressing the ROTATE key after making the channel 7 flicker by using the channel UP/DOWN key for a lower channel as shown in Figure 2E, results in the configuration of Figure 2F.

Configuring a third location (bottom right) with channel 9 and a fourth location with channel 11 is carried out in the same way as the configuration procedures for the first and second locations. The resulting screens are depicted in Figures 2G and 2H, respectively.

Pressing the SCREEN PROGRAM key to leave the screen program mode releases the strobe-stop. Then, the channels configured by the user will be displayed and the OSD display for the skip channel will disappear.

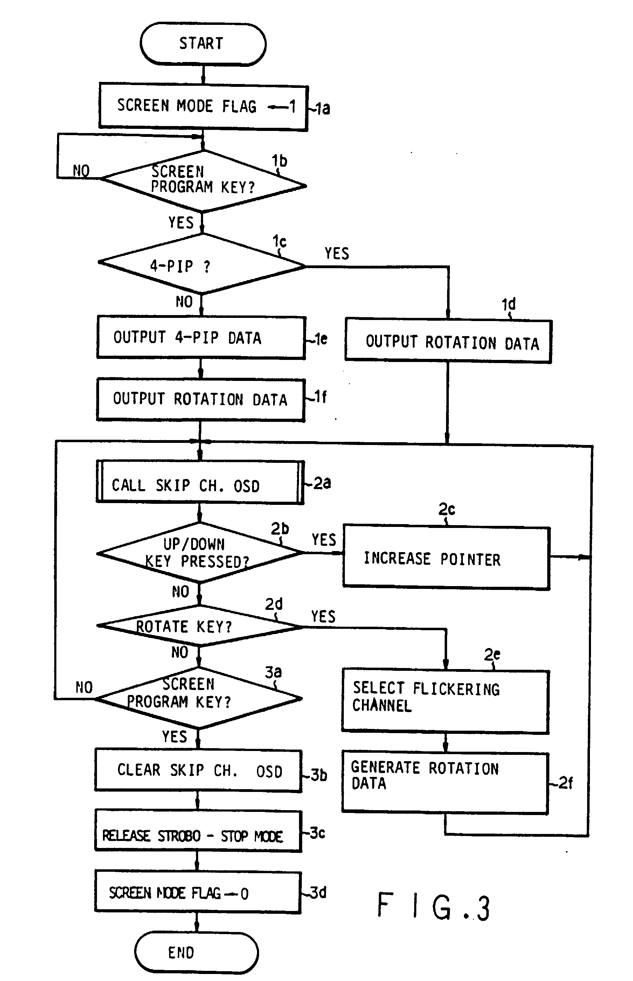

The screen program function will now be described by referring to the flow diagram in Figure 3. At step 1a, "1" is assigned to a screen mode flag and at step 1b, the microcomputer 10 checks whether the SCREEN PROGRAM key is pressed. If it is pressed, strobing will be stopped and step 1c will be executed. Otherwise, the step 1b will be repeated.

At the step 1c, the microcomputer 10 checks for 4-PIP screen mode. If 4-PIP screen mode is selected, step 1d will be executed. Otherwise, step 1e will be executed. At step 1d, the rotation data will be output and step 2a will be executed. The 4-PIP data will be output at step 1e and the rotation data will be output at step 1f, then the step 2a will be executed.

Step 2a calls the skip channel OSD and step 2b checks whether the channel UPIDOWN key is pressed. If it is pressed, the skip memory pointer value will be increased by a designated value and the step 2a will be performed again. If it is not pressed, whether the ROTATE key is pressed will be checked at step 2d. If the ROTATE key is pressed, step 2e will be executed or, otherwise, step 3a will be executed. The channel which is flickering on the skip channel OSD 18 is selected at the step 2e and then step 2f will be performed. At the step 2f, the rotation data is generated and then step 2a is executed again.

At the step 3a, whether the SCREEN PROGRAM key is pressed will be checked. If it is not pressed, the step 2a will be executed again. Otherwise, it dears the skip channel OSD 18 at step 3b and executes step 3c. The strobe-stop condition that outputs the strobing data will be released at the step 3c and then step 3d will be executed. At the step 3d, the screen mode flag will be set to "0" to complete the procedure.

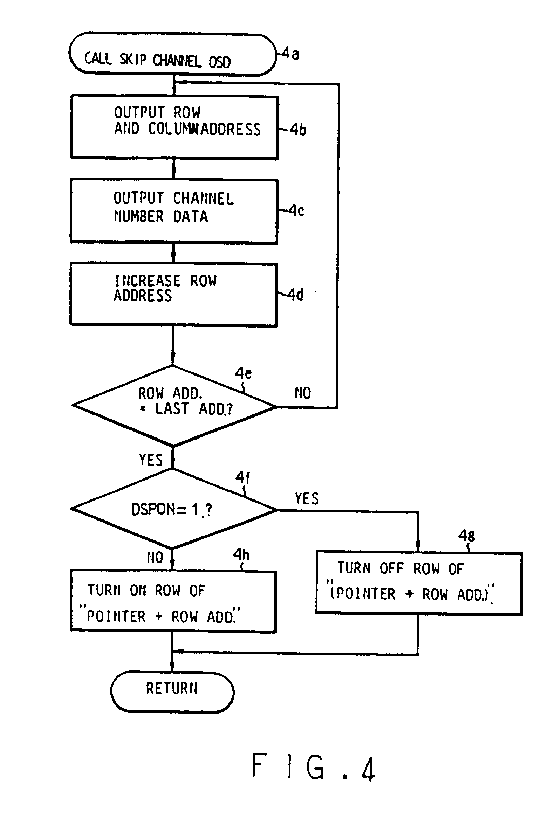

Figure 4 shows a flow diagram for indicating the channel on the screen, wherein the following steps will be executed upon calling the skip channel OSD 18 at the step 2a. The skip channel OSD 18 will be called and the data for row address and column address will be output at step 4b and then step 4c will be performed. The step 4c outputs the channel number data stored in the skip memory and step 4d increases the row address. Then step 4e will be executed. At the step 4e, whether the row address is the same as a last address will be checked. If it is not the same as the last address, the step 4b will be executed again. If it is the last address, step 4f will be executed. The step 4f checks whether display-on flag DSPON is set to "1". If it is not "1", step 4h will be executed. If it is "1", step 4g will be performed.

At the step 4g, the line corresponding to the pointer value which is added with the row address will be turned off to return. At the step 4h, the line corresponding to the pointer value plus the row address will be turned on to return to the main procedure.

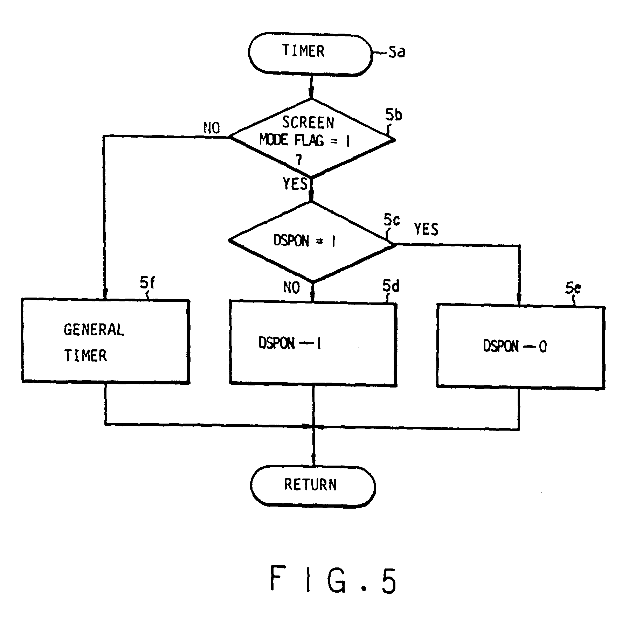

Figure 5 shows a flow diagram to show the time for the skip channel flickering interval. Step 5b checks whether the screen mode is "1" or not. If it is "1", step 5c will be executed. If not "1", step 5f will be performed. The step 5c checks whether the display-on flag DSPON is set to "1" or not. If it is not "1", the display-on flag DSPON is set to "1" at step 5d and then returns. If it is "1", the display-on flag DSPON is set to "0" at step 5e and then returns. At the step 5f, the general timer operates for a predetermined period and then returns.

As described above, for each designated screen channel memorized on the PIP screen, the user directly configures the desired PIP screen using the skip channel OSD. Therefore, the user is provided with various PIP screens which may show different channels, rather than all the same one.

## Claims

1. A video display system comprising:
a microcomputer (10) for controlling the system;
a pre-amplifier (17) for receiving and amplifying a remote control signal and outputting the amplified signal to the microcomputer (10) to control functions thereof;
first and second tuners (15,16) for tuning desired channels;
first and second input selectors (12,13) for receiving signals from said first and second tuners (15,16) and selecting image signals under the control of the microcomputer (10);
a luminance/colour (Y/C) unit (14) and picture-in-picture (PIP) unit ((11) for receiving signals from said input selectors (12,13) and generating respectively a main screen and a plurality of sub-screens;
an on-screen display (OSD) unit (18) for displaying channel numbers of channels that are available for broadcasting but not necessarily currently displayed; and
a mixer (19) for mixing a PIP screen from the PIP unit (11) with an OSD screen from the OSD unit (18), to display simultaneously on the same screen a plurality of sub-screens together with a visual display of a channel number;
wherein said microcomputer (10) is arranged to change the channel of a selected one of the sub-screens to a user selected one of said channel numbers displayed by the OSD unit (18),
said microcomputer (10) being arranged to receive a ROTATE signal and, in response thereto, cause an image from the channel of a selected one of the channel numbers to be displayed in the currently selected sub-screen, such that, in response to successive ROTATE signals, images from different channels corresponding to different selected ones of said channel numbers may be displayed successively in different ones of said sub-screens, with said sub-screens then displaying said different images simultaneously.

2. A system according to claim 1, wherein the OSD unit (18) is arranged to display simultaneously the channel numbers of a plurality of different channels that are available for broadcasting, and the microcomputer (10) is arranged to display one of said channel numbers in such a manner as to distinguish it from the other channel numbers.

3. A system according to daim 2, wherein said microcomputer (10) is arranged to display said one of said channel numbers by causing said channel number to flash or flicker.

4. A system according to daim 2 or 3, wherein said microcomputer (10) is arranged to receive a channel UP/DOWN signal and, in response thereto, cause said plurality of channel numbers and/or said one of said channel numbers to be varied.

5. A system according to any of the preceding claims, wherein a portion of said main screen is visible simultaneously with said sub-screens, on the same screen.

6. A system according to any of the preceding daims, wherein a line input (L) is provided to said input selectors (12,13) in addition to signals from said first and second tuners (15,16).

7. A system according to any of the preceding daims, wherein said microcomputer (10) is arranged to receive a SCREEN PROGRAM signal and, in response thereto, cause said system to be in or out of PIP mode.

8. A system according to any of the preceding claims, wherein said microcomputer (10) is arranged to display at least one moving image and a plurality of still images in different ones of said sub-screens.

9. A system according to any of the preceding daims, further comprising a visual display means for displaying a visual image corresponding to a signal output from said mixer (19).

10. Use of a system according to any of the preceding daims to provide a visual display, by :
(a) outputting rotation data from the microcomputer (10) to perform a strobe-stop, upon receipt of a SCREEN PROGRAM signal;
(b) checking whether a channel UP/DOWN signal is received by calling said on-screen-display in the strobe-step condition, increasing a pointer value if said channel UP/DOWN signal is received, selecting a presently displayed channel if said UP/DOWN signal is not received but said ROTATE signal is received, and thereupon outputting the rotation data; and
(c) clearing said on-screen-display if the SCREEN PROGRAM signal is received while the ROTATE signal is not received at the step (b) and outputting strobe data to release the strobe-stop condition.

11. Use of a system to provide a visual display according to claim 10, wherein said on-screen-display is called by the steps of:
(i) outputting row and column address data and channel number data stored in a channel memory if the on-screen-display is called, and checking whether said row address is the same as a last address; and
(ii) checking whether a display-on flag is set to "1" if said row address in step (i) is the same as the last address, turning off a channel number on a row corresponding to a value of the sum of the pointer and the row address if said display is in an ON-state, or otherwise turning on the channel number on said row address corresponding to the value of the sum of the pointer and the row address.

12. Use of a system to provide a visual display according to claim 10 or 11, wherein said step (a) comprises the sub-steps of:
(a1) setting a screen mode flag to "1", checking whether said SCREEN PROGRAM signal is received, and checking repeatedly whether said SCREEN PROGRAM signal is received until said SCREEN PROGRAM signal is detected;
(a2) checking whether a four picture-in-picture mode is set when the SCREEN PROGRAM signal is received at step (a1), and outputting the rotation data to perform the strobe-stop mode if the four picture-in-picture mode is set; and
(a3) outputting corresponding four picture-in-picture data if the four picture-in-picture mode is not set at step (a2), and thereupon outputting the rotation data to perform the strobe-stop mode.

13. Use of a system to provide a visual display according to claim 10, 11, or 12, wherein the step (b) comprises the sub-steps of:
(b1) calling the on-screen-display at the strobe-stop mode and checking whether the channel UP/DOWN signal is received;
(b2) increasing the pointer value if the channel UP/DOWN signal is received at the step (b1) and re-calling the on-screen-display; and
(b3) checking whether the ROTATE signal is received if the channel UPIDOWN signal is not received at the step (b1), selecting a corresponding channel which is presently flickering if the ROTATE signal is received, thereupon outputting the rotation data, and then re-calling the on-screen-display.

14. Use of a system to provide a visual display according to claim 10, 11, 12, or 13, wherein the step (c) comprises the sub-steps of:
(c1) checking whether the SCREEN PROGRAM signal is received if the ROTATE signal is not received, and re-executing the step (b) if the SCREEN PROGRAM signal is not received;
(c2) dearing the on-screen-display if the SCREEN PROGRAM signal is received at the sub-step (c1); and
(c3) outputting the strobe data to release the strobe-stop mode and setting the screen mode to "zero".

## Patentansprüche

1. Videoanzeigesystem das aufweist:
einen Mikrocomputer (10) zur Steuerung des Systems;
einen Vorverstärker (17) zum Empfang und zum Verstärken eines Femsteuersignals und Ausgabe des verstärkten Signals zu dem Mikrocomputer (10), um die Funktionen davon zu steuem;
erste und zweite Tuner (15,16) zum Abstimmen erwünschter Kanäle;
erste und zweite Eingabeselektoren (12,13) zum Empfang von Signalen von dem ersten und dem zweiten Tuner (15,16) und zum Auswählen von Bildsignalen unter Steuerung des Mikrocomputers (10);
eine Luminanz/Farb-(Y/C)-Einheit (14) und eine Bild-im-Bild-(PIP)-Einheit (11) zum Empfang von Signalen von den Eingabeselektoren (12,13) und zum Erzeugen jeweils eines Hauptbildschirms und einer Mehrzahl Unterbildschirme;
eine Auf-Bildschirm-Anzeige-(OSD)-Einheit (18) zum Anzeigen von Kanalnummem von Kanälen, die für eine Rundfunksendung zur Verfügung stehen; und
einen Mischer (19) zum Mischen eines PIP-Bildschirms von der PIP-Einheit (11) mit einem OSD-Bildschirm von der OSD-Einheit (18), um gleichzeitig auf dem Bildschirm eine Mehrzahl Unterbildschirme zusammen mit einer visuellen Anzeige einer Kanalnummer anzuzeigen;
wobei der Mikrocomputer (10) so angeordnet ist, um den Kanal eines ausgewählten der Unterbildschirme auf eine Kanalnummer hin zu ändem, die durch die OSD-Einheit (18) angezeigt ist, und der Mikrocomputer (10) so angeordnet ist, um ein ROTATE-Signal zu empfangen und, in Abhängigkeit davon, zu bewirken, daß eine Abbildung von dem Kanal einer ausgewählten der Kanalnummem angezeigt werden wird, derart, daß in Abhängigkeit aufeinanderfolgender ROTATE-Signale unterschiedliche Bilder von unterschiedlichen Kanälen entsprechend der unterschiedlich ausgewählten der Kanalnummem aufeinanderfolgend in unterschiedlichen der Unterbildschirme angezeigt werden können, wobei die Unterbildschirme dann die unterschiedlichen Abbildungen gleichzeitig anzeigen.

2. System nach Anspruch 1, wobei die OSD-Einheit (18) so angeordnet ist, um gleichzeitig die Kanalnummem einer Mehrzahl unterschiedlicher Kanäle anzuzeigen, die für eine Rundfunksendung zur Verfügung stehen, und der Mikrocomputer (10) so ausgebildet ist, um eine der Kanalnummem in einer solchen Art und Weise anzuzeigen, um ihn von den anderen Kanalnummem zu unterscheiden.

3. System nach Anspruch 2, wobei der Mikrocomputer (19) so angeordnet ist, um eine der Kanalnummem durch Bewirken, daß die Kanalnummer blitzt oder flackert, anzuzeigen.

4. System nach Anspruch 2 oder 3, wobei der Mikrocomputer (10) so ausgebildet ist, um ein Kanal-UP/DOWN-Signal zu empfangen und, in Abhängigkeit davon, zu bewirken, daß die Mehrzahl der Kanalnummem und/oder die eine der Kanalnummem variiert werden wird.

5. System nach einem der vorhergehenden Ansprüche, wobei ein Bereich des Hauptbildschirms gleichzeitig mit den Unterbildschirmen auf demselben Bildschirm sichtbar sein kann.

6. System nach einem der vorhergehenden Ansprüche, wobei eine Zeileneingabe (L) zu den Eingabeselektoren (12,13) zusätzlich zu Signalen von dem ersten und dem zweiten Tuner (15,16) geliefert wird.

7. System nach einem der vorhergehenden Ansprüche, wobei der Mikrocomputer (10) so angeordnet ist, um ein SCREEN-PROGRAM-Signal zu empfangen, und, in Abhängigkeit davon zu bewirken, daß das System in oder aus dem PIP-Modus ist.

8. System nach einem der vorhergehenden Ansprüche, wobei der Mikrocomputer (10) so angeordnet ist, um mindestens ein sich bewegendes Bild und eine Mehrzahl stehender Bilder in unterschiedlichen Unterbildschirmen anzuzeigen.

9. System nach einem der vorhergehenden Ansprüche, das weiterhin eine visuelle Anzeigevorrichtung zum Anzeigen einer visuellen Abbildung entsprechend einem Signalausgang, der von dem Mischer (19) ausgegeben wird, aufweist.

10. Verwendung eines Systems nach einem der vorhergehenden Ansprüche, um eine visuelle Anzeige zu schaffen, gekennzeichnet durch:
(a) Ausgabe von Rotationsdaten von dem Mikrocomputer (10), um einen Abfrage-Stop unter Empfang eines SCREEN-PROGRAM-Signals durchzuführen;
(b) Prüfen, ob ein Kanal UP/DOWN-Signal durch Aufruf der Ein-Bildschirm-Anzeige in den Abfrageschritt-Zustand empfangen ist, Erhöhen eines Zeigerwerts, falls das Kanal-UP/DOWN-Signal empfangen ist, Auswahl eines momentan angezeigten Kanals, falls das UP/DOWN-Signal nicht empfangen ist, allerdings das ROTATE-Signal empfangen ist, und darauf Ausgabe der Rotationsdaten; und
(c) Löschen der Auf-Bildschirm-Anzeige, falls das SCREEN-PROGRAM-Signal empfangen ist, während das ROTATE-Signal nicht empfangen ist, und zwar an dem Schritt (b), und Ausgabe von Abfragedaten, um den Abfrage-Stop-Zustand freizugeben.

11. Verwendung eines Systems, um eine visuelle Anzeige gemäß Anspruch 10 zu schaffen, wobei die Auf-Bildschirm-Anzeige durch folgende Schritte aufgerufen wird:
(i) Ausgabe von Reihen- und Spalten-Adressendaten und Kanalnummerdaten, die in einem Kanalspeicher gespeichert sind, falls die Auf-Bildschirm-Anzeige aufgerufen wird, und Prüfen, ob die Reihenadresse dieselbe ist wie eine letzte Adresse; und
(ii) Prüfung, ob ein Anzeige-Auf-Zeichen auf "1" gesetzt ist, falls die Reihenadresse in Schritt (i) dieselbe ist wie die letzte Adresse, Abschalten einer Kanalnummer auf einer Reihe entsprechend einem Wert der Summe des Zeigers und der Reihenadresse, falls die Anzeige sich in einem EIN-Zustand befindet, oder ansonsten Abstimmung der Kanalnummer auf die Reihenadresse entsprechend dem Wert der Summe des Zeigers und der Reihenadresse.

12. Verwendung eines Systems, um eine visuelle Anzeige gemäß Anspruch 10 oder 11 zu schaffen, wobei der Schritt (a) folgende Unterschritte aufweist:
(a1) Setzen eines Bildschirmmoduszeichen auf "1", Prüfen, ob das SCREEN-PROGRAM-Signal empfangen ist, und wiederholtes Prüfen, ob das SCREEN-PROGRAM-Signal empfangen ist, bis das SCREEN-PROGRAM-Signal ermittelt wird;
(a2) Prüfen, ob ein Vier-Bild-im-Bild-Modus eingestellt ist, wenn das SCREEN-PROGRAM-Signal an dem Schritt (a1) empfangen ist, und Ausgabe der Rotationsdaten, um den Abfrage-Stop-Modus durchzuführen, falls der Vier-Bild-im-Bild-Modus eingestellt ist;
(a3) Ausgabe entsprechend der Vier-Bild-im-Bild-Daten falls der Vier-Bild-im-Bild-Modus nicht in dem Schritt (a2) eingestellt ist, und darauf Ausgabe der Rotationsdaten, um den Abfrage-Stop-Modus durchzuführen.

13. Verwendung eines Systems, um eine visuelle Anzeige gemäß Anspruch 10, 11 oder 12 zu schaffen, wobei der Schritt (b) folgende Unterschritte aufweist:
(b1) Aufrufen der Auf-Bildschirm-Anzeige an dem Abfrage-Stop-Modus und Prüfen, ob das Kanal-UP/DOWN-Normalsignal empfangen ist;
(b2) Erhöhen des Zeigerwerts, falls das Kanal-UP/DOWN-Signal an dem Schritt (b1) empfangen ist und Wiederaufrufen der Auf-Bildschirm-Anzeige; und
(b3) Prüfen, ob das ROTATE-Signal empfangen ist, falls das Kanal-UP/DOWN-Signal nicht an dem Schritt (b1) empfangen ist, Auswahl eines entsprechenden Kanals, der momentan flackert, falls das ROTATE-Signal empfangen ist, darauf Ausgabe der Rotationsdaten und dann Wiederaufruf der Auf-Bildschirm-Anzeige.

14. Verwendung eines System, um eine visuelle Anzeige gemäß Anspruch 10, 11, 12 oder 13 zu schaffen, wobei der Verfahrensschritt (c) folgende Unterschritte aufweist:
(c1) Prüfen, ob das SCREEN-PROGRAM-Signal empfangen ist, falls das ROTATE-Signal nicht empfangen ist, und Wiederausführung des Schritts (b), falls das SCREEN-PROGRAM-Signal nicht empfangen ist;
(c2) Löschen der Auf-Bildschirm-Anzeige, falls das SCREEN-PROGRAM-Signal an dem Unterverfahrensschritt (c1) empfangen ist; und
(c3) Ausgabe der Abfrage-Daten, um-den Abfrage-Stop-Modus freizugeben und den Bildschirm-Modus auf "Null" einzustellen.

## Revendications

1. Système d'affichage vidéo comprenant :
- un micro-ordinateur (10) pour commander le système ;
- un préamplificateur (17) pour recevoir et amplifier un signal de commande à distance, et pour fournir en sortie le signal amplifié au micro-ordinateur (10) afin de commander les fonctions de celui-ci ;
- un premier et un second tuner (15, 16) pour s'accorder sur les canaux voulus ;
- un premier et un second sélecteur d'entrée (12, 13) pour recevoir les signaux provenant du premier et du second tuner (15, 16), et pour sélectionner des signaux d'image sous la commande du micro-ordinateur (10) ;
- un bloc luminance/couleur (L/C) (14) et un bloc image dans l'image (IDI) (11) pour recevoir les signaux provenant des sélecteurs d'entrée (12, 13) et pour générer respectivement un écran principal et une pluralité de sous-écrans ;
- un bloc d'affichage sur écran (ASE) (18) pour afficher les numéros de canaux des canaux qui sont disponibles pour diffusion mais qui ne sont pas nécessairement affichés actuellement ;
- un mélangeur (19) pour mélanger un écran IDI provenant du bloc IDI (11), avec un écran ASE provenant du bloc ASE (18), de manière à afficher simultanément sur le même écran une pluralité de sous-écrans, avec un affichage visuel d'un numéro de canal ;
- dans lequel le micro-ordinateur (10) est conçu pour changer le canal de l'un, sélectionné, des sous-écrans, de manière à passer à l'un, sélectionné par l'utilisateur, des numéros de canaux affichés par le bloc ASE (18),
- le microprocesseur (10) étant conçu pour recevoir un signal ROTATION et, en réponse à celui-ci, produire une image provenant du canal de l'un, sélectionné, des numéros de canaux à afficher dans le sous-écran actuellement sélectionné, de façon que, en réponse à des signaux ROTATION successifs, des images provenant de différents canaux correspondant aux différents numéros sélectionnés des numéros de canaux, puissent être affichées successivement dans certains des différents sous-écrans, ces sous-écrans affichant alors simultanément les différentes images.

2. Système selon la revendication 1,
caractérisé en ce que
le bloc ASE (18) est conçu pour afficher simultanément les numéros de canaux d'une pluralité de canaux différents qui sont disponibles pour diffusion, et le micro-ordinateur (10) est conçu pour afficher l'un de ces numéros de canaux de manière à le distinguer des autres numéros de canaux.

3. Système selon la revendication 2,
caractérisé en ce que
le micro-ordinateur (10) est conçu pour afficher celui ci-dessus des numéros de canaux en faisant scintiller ou clignoter ce numéro de canal.

4. Système selon la revendication 2 ou 3,
caractérisé en ce que
le micro-ordinateur (10) est conçu pour recevoir un signal MONTEE/DESCENTE de canal et, en réponse à celui-ci, faire varier la pluralité des numéros de canaux et/ou celui ci-dessus de ces numéros de canaux.

5. Système selon l'une quelconque des revendications précédentes,
caractérisé en ce qu'
une partie de l'écran principal est visible en même temps que les sous-écrans sur le même écran.

6. Système selon l'une quelconque des revendications précédentes,
caractérisé en ce qu'
une ligne d'entrée (L) est fournie aux sélecteurs d'entrée (12, 13) en plus des signaux provenant du premier et du second tuner (15, 16).

7. Système selon l'une quelconque des revendications précédentes,
caractérisé en ce que
le micro-ordinateur (10) est conçu pour recevoir un signal ECRAN PROGRAMME et, en réponse à celui-ci, faire entrer ou sortir le système du mode IDI.

8. Système selon l'une quelconque des revendications précédentes,
caractérisé en ce que
le micro-ordinateur (10) est conçu pour afficher au moins une image mobile et une pluralité d'images fixes dans les différents sous-écrans.

9. Système selon l'une quelconque des revendications précédentes,
caractérisé en ce qu'
il comprend en outre des moyens d'affichage visuels pour afficher une image visuelle correspondant à un signal de sortie provenant du mélangeur (19).

10. Utilisation d'un système selon l'une quelconque des revendications précédentes,
pour fournir un affichage visuel, en :
(a) fournissant en sortie des données de rotation provenant du micro-ordinateur (10) pour effectuer un arrêt de découpage à la réception d'un signal ECRAN PROGRAMME ;
(b) vérifiant si un signal MONTEE/DESCENTE de canal est reçu, en appelant l'affichage sur écran dans la condition d'arrêt de découpage, en augmentant une valeur de pointage si le signal MONTEE/DECENTE de canal est reçu et en sélectionnant un canal actuellement affiché si le signal MONTEE/DESCENTE n'est pas reçu mais si le signal ROTATION est reçu, puis en fournissant en sortie les données de rotation ;
(c) vidant l'affichage sur écran si le signal ECRAN PROGRAMME est reçu tandis que le signal ROTATION n'est pas reçu à l'étape (b), et fournissant en sortie les données de découpage pour libérer la condition d'arrêt de découpage.

11. Utilisation d'un système pour fournir un affichage visuel selon la revendication 10,
caractérisée en ce que
l'affichage sur écran est appelé par les étapes consistant à :
(i) fournir en sortie des données d'adresse de rangée et de colonne et des données de numéro de canal stockées dans une mémoire de canaux si l'affichage sur écran est appelé, et vérifier si l'adresse de rangée est la même qu'une dernière adresse ;
(ii) vérifier si une signalisation d'affichage sur écran est réglée à "1" si l'adresse de rangée à l'étape (i) est la même que la dernière adresse, couper un numéro de canal sur une rangée correspondant à une valeur de la somme de la valeur de pointage et de l'adresse de rangée si l'affichage est dans un état MARCHE, ou sinon allumer le numéro de canal sur l'adresse de rangée qui correspond à la valeur de la somme de la valeur de pointage et de l'adresse de rangée.

12. Utilisation d'un système pour fournir un affichage visuel selon la revendication 10 ou 11,
caractérisée en ce que
l'étape (a) comprend les sous-étapes consistant à :
(a1) régler une signalisation de mode d'écran à "1", vérifier si le signal ECRAN PROGRAMME est reçu, et vérifier de manière répétitive si le signal ECRAN PROGRAMME est reçu jusqu'à ce que ce signal ECRAN PROGRAMME soit détecté ;
(a2) vérifier si un mode à quatre images dans l'image est réglé lorsque le signal ECRAN PROGRAMME est reçu à l'étape (a1), et fournir en sortie les données de rotation pour effectuer le mode d'arrêt de découpage si le mode à quatre images dans l'image est réglé ; et
(a3) fournir en sortie les données à quatre images dans l'image correspondantes si le mode à quatre images dans l'image n'est pas réglé à l'étape (a2), puis fournir ensuite en sortie les données de rotation pour effectuer le mode d'arrêt de découpage.

13. Utilisation d'un système pour fournir un affichage visuel selon la revendication 10, 11 ou 12,
caractérisée en ce que
l'étape (b) comprend les sous-étapes consistant a :
(b1) appeler l'affichage sur écran dans le mode d'arrêt de découpage et vérifier si le signal MONTEE/DESCENTE de canal est reçu ;
(b2) augmenter la valeur de pointage si le signal MONTEE/DESCENTE de canal est reçu à l'étape (b1), et réappeler l'affichage sur écran ; et
(b3) vérifier si le signal ROTATION est reçu si le signal MONTEE/DESCENTE n'est pas reçu à l'étape (b1), sélectionner un canal correspondant qui est actuellement en train de clignoter si le signal ROTATION est reçu, puis fournir en sortie les données de rotation et réappeler ensuite l'affichage sur écran.

14. Utilisation d'un système pour fournir un affichage visuel selon la revendication 10, 11, 12 ou 13,
caractérisée en ce que
l'étape (c) comprend les sous-étapes consistant à :
(c1) vérifier si le signal ECRAN PROGRAMME est reçu si le signal ROTATION n'est pas reçu, et réeffectuer l'étape (b) si le signal ECRAN PROGRAMME n'est pas reçu ;
(c2) vider l'affichage sur écran si le signal ECRAN PROGRAMME est reçu à la sous-étape (c1) ; et
(c3) fournir en sortie les données de découpage pour libérer le mode d'arrêt de découpage et régler le mode d'écran à "zéro".
